(19) Europäisches Patentamt
European Patent Office
Office européen des brevets

(11) Publication number : **0 241 260 B1**

# (12) EUROPEAN PATENT SPECIFICATION

(45) Date of publication of patent specification : **04.03.92 Bulletin 92/10**

(51) Int. Cl.$^5$ : **C08L 67/02,** C08L 35/06

(21) Application number : **87303002.7**

(22) Date of filing : **07.04.87**

(54) **Acetophenone based bisphenol polyarylate resin compositions, their formation and molding.**

(30) Priority : **07.04.86 US 848658**

(43) Date of publication of application : **14.10.87 Bulletin 87/42**

(45) Publication of the grant of the patent : **04.03.92 Bulletin 92/10**

(84) Designated Contracting States : **BE DE ES FR GB IT NL**

(56) References cited :
**EP-A- 0 044 703**
**US-A- 4 542 187**

(73) Proprietor : **ARCO CHEMICAL TECHNOLOGY INC.**
**3 Christina Centre Suite 902 201 N Walnut Street**
**Wilmington Delaware 19801 (US)**

(72) Inventor : **Dean, Barry D.**
**10 Homestead Road**
**Bellemead New Jersey 08502 (US)**
Inventor : **Gastinger, Robert G.**
**4502 School Lane**
**Brookhaven Pennsylvania 19015 (US)**

(74) Representative : **Cropp, John Anthony David et al**
**MATHYS & SQUIRE 10 Fleet Street**
**London, EC4Y 1AY (GB)**

**EP 0 241 260 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

More specifically, this invention relates to an engineering thermoplastic resin containing an acetophenone based bisphenol polyarylate resin and a monovinyl aromatic/N-arylmaleimide copolymer.

Polyarylate blends with vinyl aromatic copolymers are taught in U. S. Pat. Nos. 3,792,118; 4,259,458; 4,286,075; and 4,327,012. A polyarylate blended with a vinyl aromatic/maleic anhydride copolymer is taught in U. S. Pat. No. 4,126,602. An aliphatic polyester containing up to 10 mole % of aromatic dicarboxylic acid units blended with vinyl aromatic copolymers including vinyl aromatic/α,β-unsaturated cyclic imides is taught in U. S. Pat. No. 4,388,446. A polymer composition comprising a polyarylate resin and a vinyl aromatic/maleimide copolymer in which the maleimide content of the copolymer is from about 40 to about 50 mole % is taught in U. S. Pat. No. 4,542,187. And, U. S. Patent 4,501,693 teaches a composition comprising a polycarbonate derived from bis(3,5-dimethyl-4-hydroxyphenyl) sulfone and a second dihydric phenol and a styrenic resin.

This invention provides a novel thermodynamically miscible polymer composition which is a fully compatible combination that exhibits a single phase and a single well defined glass temperature value.

According to this invention there is provided a moldable polymer composition comprising (A) a polyarylate comprising repeating units of the structure

-OOC-Ar-COO-X-

wherein in 30 to 70% of the units Ar is

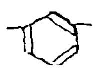

and in 70 to 30% of the units Ar is

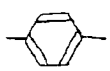,

and X is a divalent radical derived by removing the hydrogen atoms from the hydroxy groups of 1-1-bis(4-hydroxyphenyl)-1-phenyl ethane, 1,1,-bis(4-hydroxyphenyl)-diphenyl methane, 1,1-bis(4-hydroxyphenyl)fluorenone and mixtures thereof; and (B) a copolymer containing in mole percent from more than 60 to 87 recurring units of a monovinyl aromatic monomer and from 13 to less than 40 recurring units of an N-aryl-maleimide monomer, wherein the polyarylate and the copolymer are fully compatible upon blending and the resulting polymer composition exhibits a single phase and a single glass transition temperature value.

Also, according to this invention, there is provided a method for producing a molded composition which exhibits a single phase and a single glass transition temperature value which method comprises (a) forming a polymer composition comprising (A) polyarylate comprising repeating units of the structure:

-OOC-Ar-COO-X-

wherein in 30 to 70% of the units Ar is

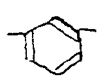

and in 70 to 30% of the units Ar is

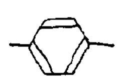,

and X is a divalent radical derived by removing the hydrogen atoms from the hydroxy groups of 1-1-bis(4-hydroxyphenyl)-1-phenyl ethane, 1,1,-bis(4-hydroxyphenyl)-diphenyl methane, 1,1-bis (4-hydroxyphenyl) fluorenone and mixtures thereof; and (B) a copolymer containing in mole percent from more than 60 to 87 recurring units of monovinyl aromatic monomer and from 13 to less than 40 recurring units of N-arylmaleimide monomer; and (b) molding the resulting polymer composition.

According to this invention there is also provided a molded composition comprising a single continuous phase, said single continuous phase being a polymer composition comprising a polyarylate containing in mole percent, from 15 to 35 isophthalic acid or its reactive derivative, from 15 to 35 terephthalic acid or its reactive derivative and 50 1,1-bis(4-hydroxyphenyl)-1-phenyl ethane; and a copolymer containing in mole percent from

more than 60 to 87 recurring units of monovinyl aromatic monomer and from 13 to less than 40 recurring units of N-arylmaleimide monomer.

In one embodiment, the impact resistance of the polymer composition is enhanced by incorporating, using conventional methods, an elastomeric polymer into the composition. The elastomeric polymer may be incorporated into the composition using any suitable method of blending or it may be incorporated into the monovinyl aromatic/N-arylmaleimide copolymer during the formation of the copolymer.

Thus, the invention also provides a molded composition comprising a continuous phase, and a disperse phase within the continuous phase, said disperse phase being said elastomeric polymer and said continuous phase being the polymer composition of polyarylate and monovinyl aromatic/N-arylmaleimide copolymer.

The invention further provides a molded composition comprising a continuous phase and a disperse phase within the continuous phase, said disperse phase being the elastomeric polymer portion of the monovinyl aromatic/N-arylmaleimide copolymer which has been modified by incorporation of an elastomeric polymer during the formation of the copolymer and said continuous phase being the polymer composition of polyarylate and monovinyl aromatic/N-arylmaleimide copolymer but excluding said elastomeric polymer portion.

In another embodiment, the polymer composition of this invention comprises from 1 to 99 weight percent of the polyarylate material and from 99 to 1 weight percent of the monovinyl aromatic/N-arylmaleimide copolymer.

In yet another embodiment, the 1,1-bis(4-hydroxphenyl)-1-phenyl ethane is replaced in whole or in part by 1,1-bis(4-hydroxyphenyl)-diphenyl methane, 1,1-bis(4-hydroxyphenyl)fluorenone, or mixtures thereof.

To produce the polyarylate material used in the practice of this invention, a combination of isophthalic acid and terephthalic acid or their reactive derivatives can be used.

Suitable reactive derivatives of isophthalic acid include isophthaloyl dichloride, diphenyl isophthalate, and the like, and their mixtures.

Suitable reactive derivatives of terephthalic acid include terephthaloyl dichloride, diphenyl terephthalate, and the like, and their mixtures.

The 1,1-bis(4-hydroxyphenyl)-1-phenyl ethane, which is preferred in the practice of the invention, is also known as bisphenol acetophenone or bisphenol ACP. Methods for producing bisphenol ACP are well known and include the condensation of phenol with either acetophenone or phenylacetylene in the presence of a suitable catalyst.

The 1,1-bis(4-hydroxyphenyl)-1-phenyl polymer has the following structure:

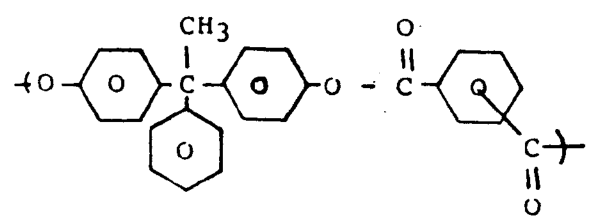

The 1,1-bis(4-hydroxyphenyl) diphenyl polymer has the following structure:

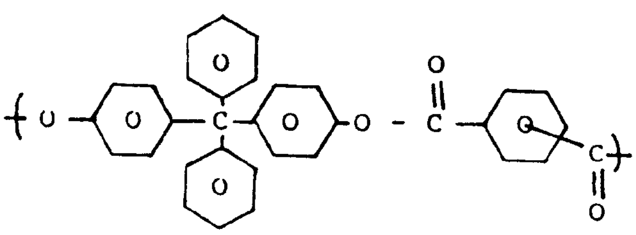

The 1,1-bis(4-hydroxyphenyl)fluorenone polymer has the following structure:

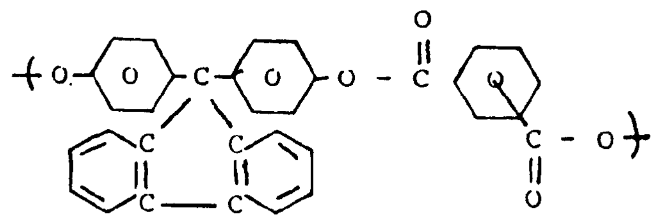

To produce a copolymer usable in the practice of this invention, any suitable monovinyl aromatic monomer and N-arylmaleimide monomer can be used. Suitable vinyl aromatic monomers include: styrene, p-methylstyrene, t-butylstyrene, and the like and their mixtures. The preferred vinyl aromatic monomer is styrene. Suitable N-arylmaleimides include N-phenylmaleimide, N-(4-t-butyl)phenylmaleimide, N-(2-chloro) phenylmaleimide, N-(4-methoxy) phenylmaleimide, and the like and their mixtures. N-phenylmaleimide is preferred.

The copolymer of a monovinyl aromatic monomer and an N-arylmaleimide monomer will contain in mole percent more than 60 to 87 recurring units of the monovinyl aromatic monomer and from 13 to less than 40 recurring units of the N-arylmaleimide monomer. Preferably, the copolymer will contain from 65 to 87 mole percent recurring units of the monovinyl aromatic monomer and from 13 to 35 recurring units of N-arylmaleimide monomer. Most preferably, the copolymer will contain from 75 to 87 mole percent recurring units of the monovinyl aromatic monomer and from 13 to 25 mole percent recurring units of the N-arylmaleimide monomer.

As stated above, the monovinyl aromatic/N-arylmaleimide copolymer can be rubber modified to enhance the impact resistance of the polymer composition by incorporating into the copolymer an elastomeric polymer during the formation of the copolymer using any conventional method of incorporation. One suitable method of incorporation is to dissolve the elastomeric polymer in the vinyl aromatic monomer followed by metered addition of the N-arylmaleimide comonomer using any suitable method of blending. Suitable elastomeric polymers are polybutadiene, EPDM rubbers, styrene/butadiene block polymers, acrylic rubbers, e.g., poly(n-butylacrylate) and other elastomers which exhibit glass transition temperatures less than or equal to 0°C. In addition, the impact resistance of the polymer composition can be enhanced, by the addition of an elastomeric polymer, as a separate component, to the blend of the polyarylate and the monovinyl aromatic/N-arylmaleimide copolymer using any suitable method of blending. Suitable elastomeric polymers include: polybutadiene, EPDM rubbers, styrene/butadiene block polymers, acrylic rubbers and other elastomers which exhibit glass transition temperature values less than or equal to 0°C. Also suitable for use as impact modifiers for the polymer composition of the invention are grafted rubbers where the graft species is styrene/acrylonitrile copolymer, styrene/N-arylmaleimide copolymer, styrene/maleimide copolymer, as well as other species capable of being grafted onto an elastomeric polymer.

If employed, the amount of elastomeric polymer will be employed in an effective amount to enhance the impact resistance of the moldable composition as compared to the impact resistance of the moldable composition in the absence of the elastomeric polymer. Typically, the elastomeric polymer will be employed in an amount of from 1 to 20 parts per each 100 parts by weight of the polymer composition excluding the weight of the elastomeric polymer.

The number average molecular weight (Mn) of the polyarylate of this invention is within the range of from 20,000 to 80,000 as determined by gel permeation chromatography. The number average molecular weight (Mn) of the monovinyl aromatic/N-arylmaleimide copolymer should be between 100,000 to 500,000; most preferably between 100,000 to 250,000 as determined by gel permeation chromatography.

The compositions of the invention may be formed by melt blending the polyarylate and the copolymer at a temperature above the softening point of the blend and preferably under conditions of high shear, e.g. as in a Brabender mixing apparatus or an extruder. Suitably, the blend is formed in an extruder at a temperature in the range 240°C to 290°C, a pressure at the die of about 6.8 to 68 bar gauge (100 to 1000 psig) and a residence time of from 1 to 5 minutes. The extrudate is suitably pelletised for moulding.

The moldable polymer compositions of this invention can also include other ingredients such as extenders, processing aids, pigments, mold release agents and the like, for their conventionally employed purpose. Also, reinforcing fillers in amounts sufficient to impart reinforcement can be used, such as titanium dioxide, potassium titanate and titanate whiskers, glass flakes and chopped glass fibers.

The composition may be moulded under pressure at a temperature above the softening point of the blend. Suitably, the composition is moulded, e.g. by injection moulding, using a temperature in the range 240°C to 310°C, a pressure of about 68 to 550 bar gauge (1000 to 8000 psig) and a residence time of 1 to 5 minutes.

The following examples serve to demonstrate the invention. Evaluation of material properties was performed based on the following ASTM standard tests: flexural modulus (D-790), tensile strength (D-638), elongation (D-638), notched Izod (D-256), and deflection temperature under load (DTUL), 3.17 mm at 1821.6 kPa (1/8" at 264 psi) (D-648). Gardner falling weight index was determined using a 31.75mm (1-1/4") diameter orifice and an 3.63kg (8-pound) 12.7 mm (1/2") diameter weight. Glass transition temperature values were determined by differential scanning colorimetry.

Example 1

This example demonstrates the preparation of a polyarylate material suitable for use in this invention.

A 1-liter resin kettle equipped with a mechanical stirrer, pressure equalising addition funnel and a nitrogen inlet/outlet system was charged with about 350 grams of water, about 20.6 grams of sodium hydroxide and about 50 gram of 1,1-bis(4-hydroxy phenyl)-1-phenyl ethane (Bisphenol ACP). The aqueous solution was cooled to 18°C and about 0.05 gram of benzyltriethylammonium chloride (phase transfer catalyst) was added. The pressure equalizing addition funnel was charged with about 34.8 grams of a 50:50 molar mixture of isophthaloyl dichloride and terephthaloyl dichloride dissolved in about 400 grams of dichloromethane. The acid chloride solution was added to the aqueous solution with rapid agitation. The internal temperature was maintained at between 18 to 22°C for about a three-hour period. The polymer was recovered by precipitation into methanol. The properties of the resulting polyarylate material are listed in Table 1.

Table 1

| | |
|---|---|
| Tg (°C) | 255 |
| Mn (GPC) | 47,800 |
| Mw/Mn | 2.2 |
| Flexural Modulus (MPa) | 2242.5 (325,000psi) |
| DTUL (°C) | 209 (408°F) |
| Notched Izod (J/m) | 1705.10 (3.2 ft-Ibs/in) |

$M_w$= weight average molecular weight

Example 2

This example demonstrates the preparation of three monovinyl aromatic/N-arylmaleimide copolymers (designated I, II, and III) suitable for use in this invention. Each copolymer was separately prepared as follows, using the amounts of materials listed in Table 2. The letters A-F listed below correspong to columns A-F in Table 2.

A 1-liter resin kettle was equipped with a mechanical stirrer, pressure equalizing addition funnel, and a nitrogen inlet/outlet system. The resin kettle was charged with (A) grams of styrene monomer and (B) grams of benzoyl peroxide. The pressure equalizing addition funnel was charged with (C) grams of a styrene/ N-phenylmaleimide comonomer solution. The reaction temperature (D) was set and the addition of the styrene/ N-phenylmaleimide solution was started and maintained at a controlled rate for a given period of time (E). Once the appropriate solids level (F) had been reached, the reaction was terminated with a tetrahydrofuran solution of hydroquinone. The polymer was recovered by precipitation into methanol. The three S/N-PMI copolymers values were analyzed to determine their glass transition temperature values, number average molecular weights and elemental nitrogen percentages. The data obtained are shown in Table 3.

Table 2

| Example 2 Copolymer No. | (A) Styrene Monomer | (B) Benzoyl Peroxide | (C) Styrene /N-PMI Comonomer Soln. | (D) Reaction Temp. (°C) | (E) Time (hrs). | (F) % Solids |
|---|---|---|---|---|---|---|
| I | 200 g | 0.4 g | 260/40 g | 96 | 1.2 | 43 |
| II | 200 g | 0.4 g | 240/60 g | 95 | 0.9 | 38 |
| III | 100 g | 0.4 g | 220/80 g | 96 | 0.7 | 34 |

Table 3

| Example 2 Copolymer No. | % N | % N-PMI Wt. | % N-PMI mole | Mn | Mw/Mn | Tg (°C) |
|---|---|---|---|---|---|---|
| I | 1.63 | 20.1 | 13 | 117,000 | 2.4 | 132 |
| II | 2.58 | 32.1 | 21 | 111,000 | 2.5 | 153 |
| III | 3.88 | 48.0 | 35 | 102,000 | 2.7 | 173 |

Example 3

This example demonstrates the thermodynamic miscibility of the polyarylate material prepared in Example 1 with the three S/N-PMI copolymers (I, II and III) prepared in Example 2.

Three separate blends (Compositions A, B, and C) were prepared in a Brabender mixing apparatus at temperatures between 260° to 300°C and samples of the three polymer blends were separately analyzed to obtain their glass transition temperature values. Molded specimens of Compositions A, B, and C were measured for deflection temperature under load (DTUL). The amounts of materials blended, glass transition temperature values and DTUL values for each composition are shown in Table 4.

Table 4

| Composition | Control | A | Control | B | Control | C | Control |
|---|---|---|---|---|---|---|---|
| Polyarylate (Example 1) | 100 | 50 | 0 | 50 | 0 | 50 | 0 |
| S/N-PMI Copolymer I | 0 | 50 | 100 | 0 | 0 | 0 | 0 |
| S/N-PMI Copolymer II | 0 | 0 | 0 | 50 | 100 | 0 | 0 |
| S/N-PMI Copolymer III | 0 | 0 | 0 | 0 | 0 | 50 | 100 |
| Tg (°C) | 255 | 190 | 132 | 201 | 153 | 211 | 173 |
| DTUL (°C) | 209 | 150 | 102 | 168 | 121 | 179 | 140 |
| DTUL (°F) | (408) | (302) | (215) | (334) | (249) | (354) | (284) |

Example 4

This example demonstrates the preparation of a thermodynamically miscible composition of this invention comprised of 50 weight % of the polyarylate material of Example 1 and 50 weight % of a rubber modified styrene/N-phenylmaleimide copolymer. The rubber modified S/N-PMI copolymer was prepared by dissolving the rubber in the styrene monomer followed by metered addition of the NPMI monomer. The resulting rubber modified S/N-PMI copolymer contained 18 weight % polybutadiene rubber and 23.5 weight % N-PMI content based on the styrenic copolymer matrix with the the balance being stryrene.

A blend of the polyarylate of Example 1 and the resulting rubber modified S/N-PMI copolymer (Composition D) was prepared in the Brabender mixing apparatus at 275°C for five minutes. Specimens were compression molded to evaluate moth deflection temperature under load and notchedIzod impact strength. The results obtained are shown in Table 5.

Table 5

| Composition | Control | D | Control |
|---|---|---|---|
| Polyarylate (Example 1) | 0 | 50 | 100 |
| Rubber Modified S/N-PMI (Example 4) | 100 | 50 | 0 |
| Tg (°C) | 136 | 201 | 255 |
| DTUL (°C) | 101 | 151 | 209 |
| DTUL (°F) | (213) | (304) | (408) |
| Notched Izod (J/m) | 959.4 | 2185.3 | 1705.6 |
| (ft-Ibs/in) | (1.8) | (4.1) | (3.2) |

Example 5

This example demonstrates the preparation of a thermodynamically miscible composition of this invention containing 50 weight % of the polyarylate material of Example 1 and 50 weight % of another rubber modified styrene/N-phenylmaleimide copolymer. The rubber modified S/N-PMI copolymer was prepared by dissolving the rubber in the styrene monomer followed by the metered addition of the N-PMI monomer. The rubber modified S/N-PMI copolymer contained 18 weight % EPDM rubber and 30 weight % N-phenylmaleimide content based on the styrenic copolymer matrix with the balance being styrene.

A blend of the polyarylate of Example 1 and the resulting rubber modified S/N-PMI copolymer was prepared (Composition E) in a Brabender mixing apparatus at 285°C for five minutes. Specimens were compression molded to evaluate both deflection temperature under load and notched Izod impact strength. The results are shown in Table 6.

Table 6

| Composition | Control | E | Control |
|---|---|---|---|
| Polyarylate (Ex. 1) | 0 | 50 | 100 |
| Rubber Modified S/N-PMI (Ex. 5) | 100 | 50 | 0 |
| Tg (°C) | 151 | 210 | 255 |
| DTUL (°C) | 121 | 157 | 209 |
| DTUL (°F) | (250) | (315) | (408) |
| Notched Izod (J/m) | 1972.1 | 3517.8 | 1705.6 |
| Notched Izod (ft-Ibs/in) | (3.7) | (6.6) | (3.2) |

**Claims**

1. A moldable polymer composition comprising

(A) a polyarylate comprising repeating units of the structure:

-OOC-Ar-COO-X-

wherein in 30 to 70% of the units Ar is

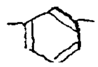

and in 70 to 30% of the units Ar is

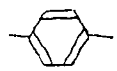 ,

and X is a divalent radical derived by removing the hydrogen atoms from the hydroxy groups of 1-1-bis(4-hydroxyphenyl)-1-phenyl ethane, 1,1,-bis(4-hydroxyphenyl)-diphenyl methane, 1,1-bis(4-hydroxyphenyl)fluorenone and mixtures thereof; and

(B) a copolymer containing in mole percent from more than 60 to 87 recurring units of a monovinyl aromatic monomer and from 13 to less than 40 recurring units of an N-aryl-maleimide monomer, wherein the polyarylate and the copolymer are fully compatible upon blending and the resulting polymer composition exhibits a single phase and a single glass transition temperature value.

2. The polymer composition of claim 1 containing from 1 to 99 percent of said polyarylate Material and from 99 to 1 weight percent of said copolymer.

3. The polymer composition of claim 1 or claim 2 in which said monovinyl aromatic monomer is selected from styrene, p-methylstyrene, and t-butylstyrene.

4. The polymer composition of any one of claims 1 to 3 in which said N-arylmaleimide is selected from N-phenylmaleimide, N-(4-t-butyl) phenylmaleimide, N-(2-chloro)phenylmaleimide, and N-(4-methoxy)phenylmaleimide.

5. The polymer composition of any one of claims 1 to 4 in which said copolymer contains in mole percent from 65 to 87 recurring units of monovinyl aromatic monomer and from 13 to 35 recurring units of N-arylmaleimide monomer.

6. The polymer composition of claim 5 in which said copolymer contains in mole percent from 75 to 87 recurring units of monovinyl aromatic monomer and from 13 to 25 recurring units of N-arylmaleimide monomer.

7. The polymer composition of any one of claims 1 to 6 which further includes an elastomeric polymer.

8. The polymer composition of any one of claims 1 to 7 in which said monovinyl aromatic/N-arylmaleimide copolymer is rubber modified with an elastomeric polymer.

9. A method for producing a molded composition which method comprises

(a) forming a moldable polymer composition as claimed in any one of claims 1 to 6, and

(b) molding the resulting composition, optionally in contact with either or both of a reinforcing filler and an elastomeric polymer.

10. The method of claim 9 in which the composition is molded in contact with an elastomeric polymer and said elastomeric polymer is introduced into the monovinyl aromatic/N-arylmaleimide copolymer during the copolymerisation of the monovinyl aromatic monomer and the N-arylmaleimide monomer.

11. A molded composition comprising a single continuous phase, said single continuous phase being a polymer composition as claimed in any one of claims 1 to 6.

12. A molded composition obtained from a composition according to claim 7 and comprising a continuous phase, and a disperse phase within the continuous phase, the disperse phase being the elastomeric polymer and the continuous phase being the polymer composition of the polyarylate and the monovinyl aromatic/N-arylmaleimide copolymer.

13. A molded composition obtained from a composition according to claim 8 and comprising a continuous phase and a disperse phase within the continuous phase, the disperse phase being the elastomeric polymer portion of the rubber modified monovinyl aromatic/N-arylmaleimide copolymer and the continuous phase being the polymer composition of the polyarylate and the monovinyl aromatic/N-arylmaleimide copolymer but excluding said elastomeric polymer portion.

**Claims for the following Contracting State: ES**

1. A moldable polymer composition comprising

(A) a polyarylate comprising repeating units of the structure:

-OOC-Ar-COO-X-

wherein in 30 to 70% of the units Ar is

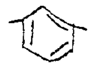

and in 70 to 30% of the units Ar is

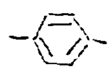 ,

and X is a divalent radical derived by removing the hydrogen atoms from the hydroxy groups of 1-1-bis(4-hydroxyphenyl)-1-phenyl ethane, 1,1,-bis(4-hydroxyphenyl)diphenyl methane, 1,1-bis(4-hydroxyphenyl)fluorenone and mixtures thereof;

(B) a copolymer

(i) containing in mole percent from more than 60 to 87 recurring units of a monovinyl aromatic monomer and from 13 to less than 40 recurring units of an N-aryl-maleimide monomer, said copolymer optionally being rubber modified with

(ii) an elastomeric polymer; and, optionally,

(C) an elastomeric polymer

and wherein the polyarylate and the copolymer are fully compatible upon blending and form in the resulting polymer composition a single phase with a single glass transition temperature value.

2. The polymer composition of claim 1 containing from 1 to 99 weight percent of said polyarylate material and from 99 to 1 weight percent of said copolymer.

3. The polymer composition of claim 1 or claim 2 in which said monovinyl aromatic monomer is selected from styrene, p-methylstyrene, and t-butylstyrene and/or said N-arylmaleimide is selected from N-phenylmaleimide, N-(4-t-butyl) phenylmaleimide, N-(2-chloro)phenylmaleimide, and N-(4-methoxy)phenylmaleimide.

4. The polymer composition of any one of claims 1 to 3 in which said copolymer contains in mole percent from 65 to 87, and preferably from 75 to 87, recurring units of monovinyl aromatic monomer and from 13 to 35, and preferably from 13 to 25, recurring units of N-arylmaleimide monomer.

5. A method of forming a moldable polymer composition, said method comprising blending together:

(A) a polyarylate comprising repeating units of the structure:

$$-OOC-Ar-COO-X-$$

wherein in 30 to 70% of the units Ar is

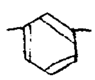

and in 70 to 30% of the units Ar is

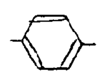 ,

and X is a divalent radical derived by removing the hydrogen atoms from the hydroxy groups of 1-1-bis(4-hydroxyphenyl)-1-phenyl ethane, 1,1,-bis(4-hydroxyphenyl)-diphenyl methane, 1,1-bis(4-hydroxyphenyl)fluorenone and mixtures thereof;

(B) a copolymer

(i) containing in mole percent from more than 60 to 87 recurring units of a monovinyl aromatic monomer and from 13 to less than 40 recurring units of an N-aryl-maleimide monomer, said copolymer optionally being rubber modified with

(ii) an elastomeric polymer; and, optionally,

(C) an elastomeric polymer

6. A method as claimed in claim 5 which comprises melt blending the components at a temperature above the softening point of the blend, and preferably under conditions of high shear.

7. A method as claimed in claim 5 or claim 6 including the further step of molding the resultant composition, optionally in contact with a reinforcing filler.

8. A method for producing a molded composition, comprising (a) forming a moldable polymer composition as claimed in any one of claims 1 to 4, and (b) molding the resulting composition, optionally in contact with a reinforcing filler.

9. The method of claim 7 or claim 8 in which component (B) is a rubber modified copolymer obtained by introducing an elastomeric polymer into the monovinyl aromatic/N-arylmaleimide copolymer during the copolymerisation of the monovinyl aromatic monomer and the N-arylmaleimide monomer.

10. A molded composition wherein the composition is as claimed in claim 1, said molded composition comprising a single continuous phase comprising components (A) and (B)(i).

11. A molded composition according to claim 10 and obtained from a composition including component (C) and comprising a continuous phase, and a disperse phase within the continuous phase, the disperse phase being the component (C) and the continuous phase being components (A) and (B)(i).

12. A molded composition according to claim 10 and obtained from a composition including component (B)(ii) and comprising a continuous phase and a disperse phase within the continuous phase, the disperse phase being the elastomeric polymer portion of the rubber modified monovinyl aromatic/N-arylmaleimide copolymer and the continuous phase being the polymer composition of the polyarylate and the monovinyl aromatic/N-arylmaleimide copolymer but excluding said elastomeric polymer portion.

## Patentansprüche

1. Formbare Polymerzusammensetzung umfassend

(A) ein Polyarylat, das wiederkehrende Einheiten der Struktur

-OOC-Ar-COO-X-

umfaßt, worin in 30 bis 70 °% der Einheiten Ar

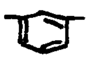

ist und in 70 bis 30 % der Einheiten Ar

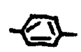

ist, und X ein zweiwertiger Rest ist, der durch Entfernen des Wasserstoffatoms aus den Hydroxygruppen von 1,1-Bis-(4-hydroxyphenyl-)1-phenylethan, 1,1-Bis-(4-hydroxyphenyl-)diphenylmethan,1,1-Bis-(4-hydroxyphenyl)-fluorenon und Mischungen davon erhalten wird; und

(B) ein Copolymer, das mehr als 60 bis 87 Molprozent wiederkehrende Einheiten eines Monovinylaromaten-Monomers und 13 bis weniger als 40 Molprozent wiederkehrende Einheiten eines N-Arylmaleimid-Monomers enthält, worin das Polyarylat und das Copolymer bei Mischen vollständig verträglich sind und die resultierende Polymerzusammensetzung eine einzige Phase und einen einzigen Wert der Glasübergangs-Temperatur zeigt.

2. Polymerzusammensetzung nach Anspruch 1, welche 1 bis 99 Gew. -% Polyarylat-Material und 99 bis 1 Gew. -% Copolymer enthält.

3. Polymerzusammensetzung nach Anspruch 1 oder Anspruch 2, in welcher das Monovinylaromaten-Monomer gewählt ist unter Styrol, p-Methylstyrol und t-Butylstyrol.

4. Polymerzusammensetzung nach irgendeinem der Ansprüche 1 bis 3, worin das N-Arylmaleimid gewählt ist unter N-Phenylmaleimid, N-(4-t-Butyl)-phenylmaleimid, N-(2-Chlor-)phenylmaleimid und N-(4-Methoxy-)phenylmaleimid.

5. Polymerzusammensetzung nach irgendeinem der Ansprüche 1 bis 4, worin das Copolymer 65 bis 87 Molprozent wiederkehrende Einheiten eines Monovinylaromaten-Monomers und 13 bis 35 Molprozent wiederkehrende Einheiten eines N-Arylmaleimid-Monomers enthält.

6. Polymerzusammensetzung nach Anspruch 5, worin das Copolymer 75 bis 87 Molprozent wiederkehrende Einheiten eines Monovinylaromaten-Monomers und 13 bis 25 Molprozent wiederkehrende Einheiten eines N-Arylmaleimid-Monomers enthält.

7. Polymerzusammensetzung nach einem der Ansprüche 1 bis 6, welche zusätzlich ein elastomeres Polymer enthält.

8. Polymerzusammensetzung nach einem der Ansprüche 1 bis 7, in welcher das Copolymer aus Monovinylaromat und N-Arylmaleimid mit einem elastomeren Polymer kautschukmodifiziert wird.

9. Verfahren zur Herstellung einer geformten Zusammensetzung, welches folgende Schritte umfaßt:

(a) Bilden einer formbaren Polymerzusammensetzung, wie sie in einem der Ansprüche 1 bis 6 beansprucht ist, und

(b) Formen der resultierenden Zusammensetzung, gegebenenfalls in Kontakt mit einem oder beiden Stoffen der Gruppe Verstärkungs-Füllmaterial und elastisches Polymer.

10. Verfahren nach Anspruch 9, in welchem die Zusammensetzung in Kontakt mit einem elastomeren Polymer geformt wird und das elastomere Polymer in das Copolymer aus Monovinylaromat und N-Arylmaleimid während der Copolymerisation des Monovinylaromaten-Monomers und des N-Arylmaleimid-Monomers eingebaut wird.

11. Geformte Zusammensetzung, welche eine einzige kontinuierliche Phase umfaßt, wobei die einzige kontinuierliche Phase eine Polymerzusammensetzung ist, wie sie in irgendeinem der Ansprüche 1 bis 6 beansprucht wird.

12. Geformte Zusammensetzung, die aus einer Zusammensetzung nach Anspruch 7 erhalten wird und eine kontinuierliche Phase und eine disperse Phase in der kontinuierlichen Phase umfaßt, wobei die disperse Phase das elastomere Polymer ist und die kontinuierliche Phase die Polymerzusammensetzung des Polyarylats und des Copolymers aus dem Monovinylaromaten und dem N - Arylmaleimid ist.

13. Geformte Zusammensetzung, die aus einer Zusammensetzung nach Anspruch 8 erhalten wird und eine kontinuierliche Phase und eine disperse Phase in der kontinuierlichen Phase umfaßt, wobei die disperse Phase der Anteil an elastomerem Polymer des mit Kautschuk modifizierten Copolymers aus einem Monovinylaromaten und einem N-Arylmaleimid ist und die kontinuierliche Phase die Polymerzusammensetzung aus dem Polyarylat und dem Copolymer aus dem Monovinylaromaten und dem N-Arylmaleimid ist, jedoch ausschließlich des Anteils an elastomerem Polymer.

**Patentanspruch Für folgenden Vertragstaat: ES**

1. Formbare Polymerzusammensetzung umfassend

(A) ein Polyarylat, das wiederkehrende Einheiten der Struktur

-OOC-Ar-COO-X-

umfaßt, worin in 30 bis 70 % der Einheiten Ar

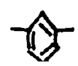

ist und in 70 bis 30 % der Einheiten Ar

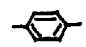

ist, und X ein zweiwertiger Rest ist, der durch Entfernen der Wasserstoffatome aus den Hydroxygruppen von 1,1-Bis-(4-hydroxyphenyl-)1-phenylethan, 1,1-Bis-(4-hydroxyphenyl-)diphenylmethan, 1,1-Bis-(4-hydroxyphenyl-)fluorenon und Mischungen davon erhalten wird;

(B) ein Copolymer,

(i) das mehr als 60 bis 87 Molprozent wiederkehrende Einheiten eines Monovinylaromaten-Monomers und 13 bis weniger als 40 Molprozent wiederkehrende Einheiten eines N-Arylmaleimid-Monomers enthält, und das Copolymer gegebenenfalls mit

(ii) einem elastomeren Polymer kautschukmodifiziert ist; und gegebenenfalls

(C) ein elastomeres Polymer;

und worin das Polyarylat und das Copolymer bei Mischen vollständig verträglich sind und in der resultierenden Polymerzusammensetzung eine einzige Phase mit einem einzigen Wert der Glasübergangs -Temperatur zeigen.

2. Polymerzusammensetzung nach Anspruch 1, welche 1 bis 99 Gew. -% Polyarylat-Material und 99 bis 1 Gew.-% Copolymer enthält.

3. Polymerzusammensetzung nach Anspruch 1 oder Anspruch 2, in welcher das Monovinylaromaten-Monomer gewählt ist unter Styrol, p-Methylstyrol und t-Butylstyrol und/oder das N-Arylmaleimid gewählt ist unter N-Phenylmaleimid, N-(4-t-Butyl-)phenylmaleimid, N-(2-Chlor-)phenylmaleimid und N-(4-Methoxy-)phenylmaleimid.

4. Polymerzusammensetzung nach irgendeinem der Ansprüche 1 bis 3, worin das Copolymer 65 bis 87 Molprozent und vorzugsweise 75 bis 87 Molprozent wiederkehrende Einheiten eines Monovinylaromaten-Monomers und 13 bis 35 Molprozent und vorzugsweise 13 bis 25 Molprozent wiederkehrende Einheiten eines N-Arylmaleimid-Monomers enthält.

5. Verfahren zur Herstellung einer formbaren Polymerzusammensetzung, wobei das Verfahren das Zusammenmischen

(A) eines Polyarylats, das wiederkehrende Einheiten der Struktur

-OOC-Ar-COO-X-

umfaßt, worin in 30 bis 70 % der Einheiten Ar

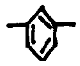

ist und in 70 bis 30 % der Einheiten Ar

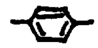

ist, und X ein zweiwertiger Rest ist, der durch Entfernen der Wasserstoffatome aus den Hydroxygruppen von 1,1-Bis-(4-hydroxyphenyl-)1-phenylethan, 1,1-Bis-(4-hydroxyphenyl-) diphenylmethan, 1,1-Bis-(4-hydroxyphenyl-)fluorenon und Mischungen davon erhalten wird;

(B) eines Copolymers,

(i) das mehr als 60 bis 87 Molprozent wiederkehrende Einheiten eines Monovinylaromaten-Monomers und 13 bis weniger als 40 Molprozent wiederkehrende Einheiten eines N- Arylmaleimid-Monomers enthält, und das Copolymer gegebenenfalls mit

(ii) einem elastomeren Polymer kautschukmodifiziert ist; und gegebenenfalls

(C) eines elastomeren Polymers umfaßt.

6. Verfahren nach Anspruch 5, welches das Schmelzmischen der Komponenten bei einer Temperatur oberhalb des Erweichungspunktes der Mischung und vorzugsweise unter Bedingungen hoher Scherung umfaßt.

7. Verfahren nach Anspruch 5 oder Anspruch 6, welches als weiteren Schritt das Formen der resultierenden Zusammensetzung, gegebenenfalls in Kontakt mit einem Verstärkungs-Füllmaterial, einschließt.

8. Verfahren zur Herstellung einer geformten Zusammensetzung, welches umfaßt:

(a) Bilden einer formbaren Polymerzusammensetzung, wie sie in einem der Ansprüche 1 bis 4 beansprucht ist, und

(b) Formen der resultierenden Zusammensetzung, gegebenenfalls in Kontakt mit einem Verstärkungs - Füllmaterial.

9. Verfahren nach Anspruch 7 oder Anspruch 8, in welchem die Komponente (B) ein kautschukmodifiziertes Copolymer ist, das durch Einbauen eines elastomeren Polymers in das Copolymer aus Monovinylaromat und N-Arylmaleimid während der Copolymerisation des Monovinylaromaten-Monomers und des N-Arylmaleimid-Monomers erhalten wird.

10. Geformte Zusammensetzung, worin die Zusammensetzung diejenige ist, wie sie in Anspruch 1 beansprucht wird, wobei die geformte Zusammensetzung eine einzige kontinuierliche Phase, welche die Komponenten (A) und (B) (i) umfaßt, umfaßt.

11. Geformte Zusammensetzung nach Anspruch 10, welche aus einer Zusammensetzung, die die Komponente (C) einschließt, erhalten wird und eine kontinuierliche Phase und eine disperse Phase in der kontinuierlichen Phase umfaßt, wobei die disperse Phase die Komponente (C) ist und die kontinuierliche Phase die Komponenten (A) und (B) (i) sind.

12. Geformte Zusammensetzung nach Anspruch 10, welche aus einer Zusammensetzung, die die Komponente (B) (ii) einschließt, erhalten wird und eine kontinuierliche Phase und eine disperse Phase in der kontinuierlichen Phase umfaßt, wobei die disperse Phase der Anteil an elastomerem Polymer des mit Kautschuk modifizierten Copolymers aus einem Monovinylaromaten und einem N-Arylmaleimid ist und die kontinuierliche Phase die Polymerzusammensetzung aus dem Polyarylat und dem Copolymer aus dem Monovinylaromaten und dem N-Arylmaleimid ist, jedoch ausschließlich des Anteils an elastomerem Polymer.

## Revendications

1. Composition de polymèr-es moulable comprenant:

(A) un polyarylate comprenant les unités répétées de structure:

-OOC-Ar-COO-X-

dans laquelle dans 30 à 70% des unités, Ar est un groupe

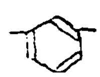

et dans 70 à 30% des unités, Ar est un groupe

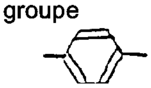 ,

et X est un radical divalent obtenu par élimination des atomes; d'hydrogène des groupes hydroxy du 1,1-bis-(4-hydroxyphényl)-1-phényl éthane, 1,1 -bis-(4-hydroxyphényl)-diphényl méthane, 1,1-bis-(4-hydroxyphényl)-fluorénone et leurs mélanges; et

(B) un copolymère contenant en pourcentage molaire, de plus de 60 à 87 unités récurrentes d'un monomère aromatique monovinylique et de 13 à moins de 40 unités récurrentes d'un monomère N-arylmaléimide, dans laquelle le polyarylate et le copolymère sont complètement compatibles lors du mélange et la, composition de polymères résultante présente une phase unique et une seule valeur de température de transition vitreuse.

2. Composition de polymères suivant la revendication 1 contenant de 1 à 99% en poids de ce polyarylate et de 99 à 1% en poids de ce copolymère.

3. Composition de polymères suivant la revendication 1 ou la revendication 2, dans laquelle ce monomère aromatique monovinylique est choisi parmi le styrène, le p-méthylstyrène et le t-butylstyrène.

4. Composition de polymères suivant l'une quelconque des revendications 1 à 3, dans laquelle cet N-arylmaléimide est choisi parmi le N-phénylmaléimide, le N-(4-t-butyl)phénylmaléimide, le N-(2-chloro)phénylmaléimide et le N-(4-méthoxy)phénylmaléimide.

5. Composition de polymères suivant l'une quelconque des revendications 1 à 4, dans laquelle ce copolymère contient en pourcentage molaire, de 65 à 87 unités recurrentes de monomère aromatique monovinylique et de 13, à 35 unités récurrentes de monomère N-arylmaléimide.

6. Composition de polymères suivant la revendication 5, dans laquelle ce copolymère contient en pourcentage molaire, de 75 à 87 unités récurrentes de monomère aromatique monovinylique et de 13 à 25 unités récurrentes de monomère N-arylmaléimide.

7. Composition de polymères suivant l'une quelconque des revendications 1 à 6, qui comprend de plus un polymère élastomère.

8. Composition de polymères suivant l'une quelconque des revendications 1 à 7, dans laquelle ce copolymère aromatique monovinylique/N-arylmaléimide est modifié par un caoutchouc avec un polymère élastomère.

9. Procédé pour produire une composition moulée, qui comprend

(a) la foramtion d'une composition de polymères moulable suivant l'une quelconque des revendications 1 à 6, et

(b) le moulage de la composition résultante, éventuellement en contact avec une charge de renforcement et/ou un polymère élastomère.

10. Procédé suivant la revendication 9, dans laquel la composition est moulée en contact avec un polymère élastomère, ce polymère élastomère étant introduit dans le copolymère aromatique monovinylique/N-arylmaléimide au cours de la copolymérisation du monomère aromatique monovinylique et du monomère N-arylmaléimique.

11. Composition moulée comprenant une phase continue unique, cette phase continue unique étant une composition de polymères suivant l'une quelconque des revendications 1 à 6.

12. Composition moulée obtenue à partir d'une composition suivant la revendication 7 et comprenant une phase continue et une phase dispersée à l'intérieur de la phase continue, la phase dispersée étant le polymère élastomère et la phase continue étant la composition de polymères de polyarylate et de copolymère aromatique monovinylique/N-arylmaléimide.

13. Composition moulée obtenue à partir d'une composition suivant la revendication 8 et comprenant une phase continue et une phase dispersée à l'intérieur de la phase continue, la phase dispersée étant la partie polymère élastomère du copolymère monovinylique aromatique/N-arylmaléimide modifié par un caoutchouc et la phase continue étant la composition de polymères de polyarylate et de copolymère aromatique monovinylique/N-arylmaléimide, mais à l'exclusion de cette partie de polymère élastomère.

**Revendications pour l'Etat contractant suivant: ES**

1. Composition de polymères moulable comprenant:

(A) un polyarylate comprenant les unités répétées de structure:

-OOC-Ar-COO-X-

dans laquelle dans 30 à 70% des unités, Ar est un groupe

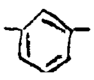

et dans 70 à 30% des unités, Ar est un groupe

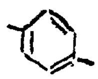 ,

et X est un radical divalent obtenu par élimination des atomes d'hydrogène des groupes hydroxy du 1,1-bis-(4-hydroxyphényl)-1-phényl éthane, 1,1-bis-(4-hydroxyphényl)-diphényl méthane, 1,1-bis-(4-hydroxyphényl)-fluorénone et leurs mélanges; et

(B) un copolymère

(i) contenant en pourcentage molaire, de plus de 60 à 87 unités récurrentes d'un monomère aromatique monovinylique et de 13 à moins de 40 unités récurrentes d'un monomère N-aryl-maléimide, ce copolymère étant éventuellement modifié par un caoutchouc avec

(ii) un polymère élastomère; et éventuellement,

(C) un polymère élastomère

et dans laquelle le polyacrylate et le copolymère sont complètement compatibles lors du mélange et forment dans la composition de polymères résultante une phase unique ayant une seule valeur de température de transition vitreuse.

2. Composition de polymères suivant la revendication 1 contenant de 1 à 99% en poids de ce polyarylate et de 99 à 1% en poids de ce copolymère.

3. Composition de polymères suivant la revendication 1 ou la revendication 2, dans laquelle ce monomère aromatique monovinylique est choisi parmi le styrène, le p-méthylstyrène et le t-butylstyrène et/ou cet N-arylmaléimide est choisi parmi le N-phénylmaléimide, le N-(4-t-butyl)phénylmaléimide, le N-(2-chloro)phénylmaléimide et le N-(4-méthoxy)phénylmaléimide.

4. Composition de polymères suivant l'une quelconque des revendications 1 à 3, dans laquelle ce copolymère contient en pourcentage molaire, de 65 à 87 et de préférence de 75 à 87 unités récurrentes de monomère aromatique monovinylique et de 13 à 35 et de préférence de 13 à 25 unités récurrentes de monomère N-arylmaléimide.

5. Procédé pour produire une composition moulable, comprenant le mélange de:

(A) un polyarylate comprenant les unités répétées de structure:

-OOC-Ar-COO-X-

dans laquelle dans 30 à 70% des unités, Ar est un groupe

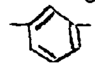

et dans 70 à 30% des unités, Ar est un groupe

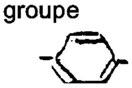 ,

et X est un radical divalent obtenu par élimination des atomes d'hydrogène des groupes hydroxy du 1,1-bis-(4-hydroxyphényl)-1-phényl éthane, 1,1-bis-(4-hydroxyphényl)-diphényl méthane, 1,1-bis-(4-hydroxyphényl)-fluorénone et leurs mélanges; et

(B) un copolymère

(i) contenant en pourcentage molaire, de plus de 60 à 87 unités récurrentes d'un monomère aromatique monovinylique et de 13 à moins de 40 unités récurrentes d'un monomère N-aryl-maléimide, ce copolymère étant éventuellement modifié par un caouchouc avec

(ii) un polymère élastomère; et éventuellement,

(C) un polymère élastomère.

6. Procédé suivant la revendication 5, qui comprend le mélange à l'état fondu des composants à une température supérieure au point de ramollissement du mélange et de préférence dans des conditions de fort cisaillement.

7. Procédé suivant la revendication 5 ou la revendication 6, comprenant l'étape supplémentaire de moulage de la composition résultante, éventuellement en contact avec une charge de renforcement.

8. Procédé pour produire une composition moulée, qui comprend (a) la formation d'une composition de polymères moulable suivant l'une quelconque des revendications 1 à 4, et (b) le moulage de la composition résultante, éventuellement en contact avec une charge de renforcement.

9. Procédé suivant la revendication 7 ou la revendication 8, dans lequel le composant (B) est un copolymère modifié par un caoutchouc obtenu par introduction d'un polymère élastomère dans le copolymère aromatique

monovinylique/N-arylmaléimide au cours de la copolymérisation du monomère aromatique monovinylique et du monomère N-arylmaléimide.

10. Composition moulée dans laquelle la composition est suivant la revendication 1, cette composition moulée comprenant une phase continue unique comprenant les composants (A) et (B) (i).

11. Composition moulée suivant la revendication 10 et obtenue à partir d'une composition incluant le composant (C) et comprenant une phase continue et une phase dispersée à l'intérieur de la phase continue, la phase dispersée étant le composant (C) et la phase continue étant les composants (A) et (B)(i).

12. Composition moulée suivant la revendication 10 et obtenue à partir d'une composition incluant le composant (B)(ii) et comprenant une phase continue et une phase dispersée à l'intérieur de la phase continue, la phase dispersée étant la partie polymère élastomère du copolymère monovinylique aromatique/N-arylmaléimide modifié par un caoutchouc et la phase continue étant la composition de polymères de polyarylate et de copolymère aromatique monovinylique/N-arylmaléimide, mais à l'exclusion de cette partie de polymère élastomère.